# EUROPEAN PATENT APPLICATION

(11) **EP 2 535 565 A1**
(43) Date of publication of application: **19.12.2012**
(21) Application number: 10845000.8
(22) Date of filing: 28.06.2010
(51) Int. Cl.: F03D 3/06

(54) **SUPPORTING ROD STRUCTURE OF WIND WHEEL IN VERTICAL AXIS WIND POWER GENERATOR**

(30) Priority: 08.02.2010 CN 201019114070
(71) Applicant: National Wind Energy Co. Ltd., Pinggu District, Beijing 101206 (CN)
(72) Inventor: JIANG, Dalong, Beijing 101206 (CN); SHENG, Mingfan, Beijing 101206 (CN); XU, Jinquan, Beijing 101206 (CN)
(74) Representative: Lambert, Ian Robert
(86) International application number: PCT/CN2010/000960
(87) International publication number: WO 2011/094915

(57) **Abstract**

The present invention provides a knighthead structure of the rotor in vertical axis wind turbine including knightheads, and the said knighthead is placed between the blade on the rotor of the said wind turbine and the hub or the rotating component of the said wind turbine, furthermore, at one end of the knighthead is provided a connecting mechanism for connecting with the inner side surface of the blade of the said hub to which the said blade is facing, while another connecting mechanism is provided at the other end for connecting with the said hub or the rotating component of the said wind turbine. The strength and rigidity of this knighthead structure for connecting and supporting the blades are very high, enabling the rotor to run safely at a wind force of up to 50m/sec without any deformation and breakdown, and their light weight enables the rotor to start power generation even at a wind velocity of 2m/sec.

## Description

### Technical field

The present invention belongs to the technical field of wind turbine which provides a structure in the vertical axis wind turbine, in particular a knighthead structure of rotor in a vertical axis wind turbine.

### Background art

In prior art, wind turbines are mostly horizontal axis turbine where the main axis is placed horizontally, on which rotor is mounted, the rotor blades are mostly of triangle-shape with one end bigger and the other end smaller, the smaller end being slender, and normally the rotor blades of a wind turbine extend from the rotor hub to the outer rim, which is very long, being several meter or even more than 10m long. Such slender blades are susceptible to deformation and generation of resonance vibration when wind power is high, can also be easily broken under the action of wind pressure, thus, such rotors have such shortcomings as poor wind resistance, the generation of resonance vibration when rotating, low power and high breakage probability, etc. In the later period of wind turbine development, vertical axis wind turbine demonstrates more and more of its advantages such as high efficiency, high power and easy installation and use, long service life, etc. However, ordinary vertical axis wind turbines only have the turbine spindle changed from the horizontal position to the vertical position while the blades on them are usually utilize the rotors of the existing horizontal axis wind turbine, where the blades are still long and slender beginning from the connecting end of the rotating part of the turbine to the outer end of the rotor. Therefore, many problems of the rotors of the aforesaid horizontal axis wind turbines remain to be completely solved. The applicant of the present invention has developed a kind of blade used for vertical rotor of a vertical axis wind turbine, which as a shape of a vertical cylinder parallel with the vertical axis of a rotor, whose horizontal cross-section resembles the cross-section of a airplane wing, ie., the outer surface of the outside of the blade is of a streamline contour, and there is a smooth transition between this outside surface and the inner side surface on its opposite to form a relatively large windward end (head end and the relatively smaller tail end of a blade). Such blade is located at the outer rim of the rotor, and a connecting mechanism is provided between the blade and the rotor hub connected by the rotating component of the wind turbine or between the blade and the rotating component of the wind turbine for connection of a knighthead, while the stationary components are circularly provided on the pylon at the center to correspond with the rotating component of the wind turbine or the fixed connecting position of said rotor hub corresponding with the rotating component of the wind turbine. The shape and structure of the knighthead might affect the rotating performance of the rotor, which may further affect the power and efficiency of the wind turbine.

### Description of the present invention

The purpose of the present invention is to provide a rotor knighthead structure of a vertical axis wind turbine used for connecting the vertical cylinder-shaped blade and the rotor hub or the rotating component of the wind turbine, making it to have sufficient strength and rigidity and small resistance without affecting the power and efficiency of the wind turbine.

The purpose of the present invention is fulfilled as follows:
The knighthead structure of the rotor in a vertical axis wind turbine provided by the present invention, wherein the said knighthead is placed between the blade on the rotor of the said wind turbine and the hub or the rotating component of the said wind turbine, furthermore, at one end of the knighthead is provided a connecting mechanism for connecting with the inner side surface of the blade of the said hub to which the said blade is facing, while another connecting mechanism is provided at the other end for connecting with the said hub or the rotating component of the said wind turbine.

The knighthead may be a straight lever.

The said knighthead may includes one primary knighthead, one main T-joint and two secondary knightheads, and at one end of the main knighthead is provided the said connecting structure that is coupled with the rotor hub or turbine rotating component; one end of the two secondary knighthead is provided a connecting structure coupled with the said blades; on the said main T-joint are provided three holes which are provided on the main T-joint equally distributed into a Y-shape, into one hole on one side of which is inserted the other end of the said primary knighthead, enabling the said main T-joint to be fixed on the primary knighthead while into the other two holes on the other side of the main T-joint are inserted respectively the other end of the said secondary knighthead, enabling the said secondary knighthead to be fixed with the primary knighthead through the T-joint.

The said knighthead as well as each of the two sections of knighthead, namely the primary knighthead and the secondary knighthead, may be member bars each having an elliptical cross-section with the long axis in the horizontal direction.

The two secondary knightheads are placed in the same horizontal plane.

The ratio of long axis to short axis of the said elliptical cross-section is 1/2-3/4. And the ratio of long axis to short axis of the said ellipse is preferably taken as 3:2.

The said connecting structure of the said knighthead or of the one end of the said primary knighthead to be connected with the rotating component of the said turbine is as such: A T-shaped connecting piece is provided at the corresponding end of the said knighthead or the said primary knighthead, and the said connecting piece includes a pipe segment whose cavity matches with the end of the said knighthead or the said primary knighthead, at one end of the pipe segment is fixed a connecting part whose area is greater than the cross-section of the said pipe segment and whose end face matches the shape of the outer wall of the said rotor hub or the rotating component of the said wind turbine, on which is provided a connecting structure used for fixed connection of the rotating component of the wind turbine, and in the said internal cavity of the pipe segment is inserted and fixed the end of the said primary knighthead; and/or,

The said connecting structure of the said knighthead or the one end of the primary knighthead to be connected with the inner side surface of the said blade is as such: A T-shaped connecting piece is provided at the corresponding end of the said knighthead or the said secondary knighthead, and the said connecting piece includes a pipe segment whose cavity matches with the shape of the end of the said knighthead or the said secondary knighthead, at one end of the pipe segment is fixed a connecting part whose area is greater than the cross-section of the said pipe segment and whose end face matches the shape of the inner wall of the said blade, on which is provided a connecting structure used for fixed connection on the inner surface of the blade, and in the said internal cavity of the pipe segment is inserted and fixed the end of the said knighthead or the secondary knighthead.

The connecting structure provided on the said connecting part is a bolt hole or screw hole, in which bolt or screw is inserted and placed for fixed connection of one end of the said knighthead on the rotating component of the wind turbine or rotor hub while the other end is fixed on the blade.

The angle formed by the two secondary knightheads is designed based on the width of the blade, and the two secondary knightheads are placed in one horizontal plane, enabling the said secondary knightheads to be connected near the two ends of the blade in the same horizontal plane.

The said primary knightheads and the secondary knightheads are made of aluminum profiles. The various connecting pieces and the main T-joints may be made of cast aluminum. The said aluminum profiles are of lightweight, thus, they are very light in weight, and do not affect the rotational power and efficiency of the rotor.

The corresponding quantity of the said knightheads and the said blades in the said wind turbine is as such: one blade corresponds with two knightheads and the connecting structures of two knightheads respectively correspond with the said inner side surfaces of the said blade at the upper and lower ends in order to form the connecting structures at the four corners of the inner side surface of the said blade.

The corresponding quantity of the said knightheads and the said blades in the said rotor is as such: one blade corresponds with two or more knightheads, and in the case of two knightheads, the connecting structures of the said two knightheads respectively correspond with the said inner side surface of the said blade at the upper and lower ends, which, through the knighthead or the said secondary knightheads, form the connecting structures at two points of the inner side surface of the said blade or at four points at the four corners; in the case of multiple knightheads, the said connecting structures of two such knightheads correspond and are connected with the inner side surfaces of the said blade at the upper and lower ends respectively, while the rest of the knightheads correspond with the said inner side surfaces of the said blade between the upper and lower ends.

The number of knightheads is relevant to the height of the blade, and the distance between neighboring knightheads should be able to accommodate for the knightheads and the rotor hub connected therewith, and motor components should be provided between at least a part of the hubs and the rotor axis, for which sufficient space should also be reserved.

The present invention provides a knighthead structure of the rotor in vertical axis wind turbine, and through their reasonable primary knighthead and secondary knighthead structures as well as material selection, their strength and rigidity for connecting and supporting the blades are very high, enabling the rotor to run safely at a wind force of up to 50m/sec without any deformation and breakdown, meanwhile, their light weight enables the starting torque of the rotor to be very small, which may start power generation even at a wind velocity of 2m/sec.

### Brief description of the drawings

Fig. 1 is a structural schematic diagram showing the rotor in the vertical axis wind turbine for which a knighthead structure is provided according to the present invention;
Fig. 2 is top view illustrating the knighthead structure provided by the present invention for the rotor in the vertical axis wind turbine;
Fig. 3 is a front view illustrating the blade and the rotating component of the wind turbine connected by the knighthead structure.
Fig. 4 illustrates the structure of the elliptical T-shaped connecting piece connecting
the primary knighthead and the rotating component of the wind turbine.

### Detailed description of the preferred embodiments

The knighthead structure of the rotor in a vertical axis wind turbine provided by the present invention includes knighthead, and the said knighthead is placed between the blade on the rotor of the said wind turbine and the hub or the rotating component of the said wind turbine, furthermore, at one end of the knighthead is provided a connecting mechanism for connecting with the inner side surface of the blade of the said hub to which the said blade is facing, while another connecting mechanism is provided at the other end for connecting with the said hub or the rotating component of the said wind turbine.

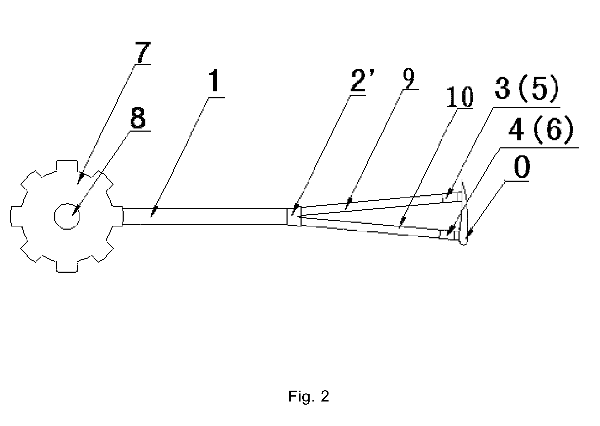

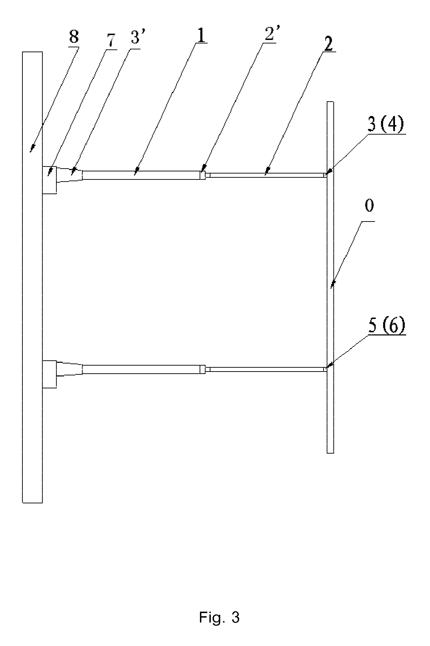

In one possible specific example of one aspect, the number of knightheads on one rotor is twice that of the blades, as shown in Figs. 2 and 3, a blade is connected onto the rotating component or rotor hub located on center pylon 8 by means of two knightheads respectively in the upper and lower positions. The said knightheads may be straight levers, and a preferred design is as such: each knighthead includes two sections 1 and 2, where section 1 is the primary knighthead, section 2 comprises two secondary knightheads 9 and 10, furthermore, it also includes a main T-joint 2' . On the main T-joint are provided three holes which are provided on the main T-joint equally distributed into a Y-shape, into one hole on one side of which is inserted one end of the primary knighthead 1 for fixed connection on primary knighthead 1, while into the other two holes on the other side of the main T-joint 2' are inserted respectively one end of the said secondary knightheads 9 and 10, enabling the secondary knightheads 9 and 10 to be fixed and connected with the primary knighthead 1 through the main T-joint 2' , the other end of the primary knighthead 1 connects with rotating component 7 of the wind turbine while the other ends of the two secondary knightheads are connected with the inner side surfaces of Blade 0. One knighthead is connected with the upper part of the vertical cylindrical blade 0 while another knighthead is connected with the lower part thereof in such a manner that the two knightheads (top and bottom) are kept parallel with each other. When there are two knightheads, the said connecting structures of the two said knightheads respectively correspond with the inner side surfaces at the upper and lower ends of the blade, which, through the knighthead or the said secondary knightheads, form the connecting structures at two points of the inner side surface of the said blade or at four points at the four corners.

The two secondary knightheads may be placed in the same horizontal plane.

The cross-sections of the primary knighthead 1 and the secondary knightheads 9 and 10 are all in elliptical shape whose long axis is in the horizontal direction. The preferred ratio of long axis to short axis is 3:2.

One end of the primary knighthead 1 inside the upper knighthead is coupled with rotating component 7 of the wind turbine through an elliptical T-shaped connecting piece 3' ; the other ends of the secondary knightheads 9 and 10 of the upper knighthead are respectively fixed near both ends of the inner side surfaces in the upper part of a blade 0 through an elliptical T-shaped connecting piece 3 and an elliptical T-shaped connecting piece 4. The connecting structure of the primary knighthead and the secondary knightheads in the lower knighthead is identical to that of the upper knighthead. When the knighthead structure provided by the present invention is used for connecting with a blade, on its inner surface the upper two secondary knightheads and the lower two secondary knightheads form a four-point fixed connection respectively through two elliptical T-shaped connecting pieces 3 and 4 as well as two elliptical T-shaped connecting pieces 5 and 6, although the connecting structure is simple, the connection is robust and stable.

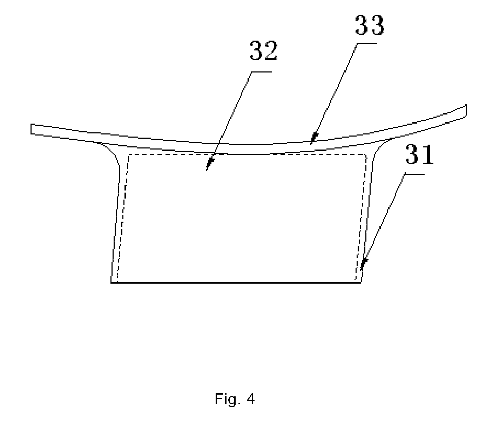

An elliptical T-shaped connecting piece 3' is provided at one end of the primary knighthead 1 as shown in Fig. 4, which includes an elliptical pipe segment 31, the pipe bore 32 matches the outline of the end of the primary knighthead 1, at one end of the pipe segment 31 is fixed a connecting piece 33, whose surface is greater than the cross-section of the pipe segment, and whose end face matches the shape of the outer wall of the rotating component of the said wind turbine 7, on which connecting structure is provided, for instance, it may be bolt hole or screw hole, into which bolt or screw is inserted for its fixed connection on the rotating component of the wind turbine, and one end of the primary knighthead 1 is inserted and fixed in the pipe bore 32 of pipe segment 31.

The structure of the elliptical T-shaped connecting pieces 3, 4, 5 and 6 used for connecting the secondary knightheads with the inner side surfaces of the blade is basically identical to that of the aforesaid elliptical T-shaped connecting piece 3' , except that the end face of the connecting piece thereof matches the form of the inner side surface of the blade. An elliptical T-shaped connecting piece is provided at one end of the said secondary knightheads and one end of the said secondary knighthead is inserted and fixed in the pipe bore of the said pipe segment. This elliptical T-shaped connecting piece is used for fixed connection of blade 0 via a bolt or a screw.

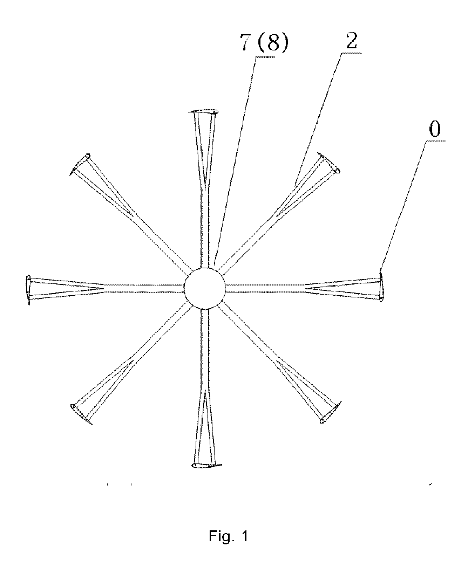

As shown in Figs. 1, 2 and 3, the shape of Blade 0 used for the vertical axis wind turbine is a vertical cylindrical object which is parallel with the perpendicular axis of the wind rotor, the horizontal cross-section of the blade is of the cross-sectional form of airplane wing, that is, in relation to the rotor spindle, its outer side surface and windward end face are smoothly transitional streamline contours, and the distance between the outer side surface and the inner side surface is transitional, the said distance of the windward face of the blade is relatively larger, which gradually reduces along the wind-blowing direction; the various horizontal cross-sections are the same in both size and form in the vertical direction of the blade. Such blade is provided at the outer rim of the rotor, and knighthead is used to connect the blade and the rotor spindle or the rotating component of the wind turbine, where the upper and lower ends of Blade 0 are connected with two of the said knightheads, and the inner surface of the upper knighthead is connected with the rotating component of wind turbine 7, while the stationary component of the wind turbine is provided on the center pylon 8. The primary knighthead on the inner surface of the lower knighthead is coupled with the rotor hub via an elliptical T-shaped connecting piece.

The corresponding quantity of the said knightheads and the said blades in the said wind rotor may also be as such: one blade corresponds with multiple knightheads, and in the case of multiple knightheads, the said connecting structures of two of the knights are respectively connected with the corresponding inner side surfaces at the upper and lower ends of the said blade, while the rest of the knightheads correspond with the said inner side surfaces of the portion between the upper and lower ends of the said blade.

The various knightheads are of elliptical cross-section with a small wind resistance and may be favorable for start of the rotor at a low wind velocity and reduction of the power consumption in operation.

### Industrial applicability

The knighthead structure of the rotor in a vertical axis wind turbine according to the present invention is used for supporting the rotor of a vertical axis wind turbine.

## Claims

1. A knighthead structure for rotor in vertical axis wind turbine, wherein knightheads are included, and the said knighthead is placed between the blade and hub on rotor of the said wind turbine or the rotating component of the said wind turbine, and at one end of the knighthead is provided a connecting structure coupled with the inner side surface of the blade of the said hub toward which is said blade is facing, and at the other end is provided a connecting structure coupled with the said hub or the rotating component of the said wind turbine.

2. The knighthead structure of rotor in the vertical axis wind turbine of Claim 1 wherein the said knighthead includes one primary knighthead, one main T-joint and two secondary knightheads, and at one end of the said primary knighthead is provided a connecting structure coupled with the said rotor hub or the rotating component of the wind turbine; at one end of the two secondary knightheads is provided with a connecting structure fixed with the said blade; on the said main T-joint are provided three holes which are provided on the main T-joint equally distributed into a Y-shape, into one hole on one side of which is inserted the other end of the said primary knighthead, enabling the said main T-joint to be fixed on the primary knighthead while into the other two holes on the other side of the main T-joint are inserted respectively the other end of the said secondary knighthead, enabling the said secondary knighthead to be fixed with the primary knighthead through the T-joint.

3. The knighthead structure of rotor in the vertical axis wind turbine of Claim 1 wherein the said knighthead is a lever with an elliptical cross-section whose long axis is in the horizontal direction.

4. The knighthead structure of rotor in the vertical axis wind turbine of Claim 2 wherein the said primary knighthead and/or the secondary knighthead all have an elliptical cross-section whose long axis is in the horizontal direction.

5. The knighthead structure of rotor in the vertical axis wind turbine of Claim 3 or Claim 4 wherein the ratio of long axis to short axis of the said elliptical cross-section is 1/2-3/4.

6. The knighthead structure of rotor in the vertical axis wind turbine of Claim 5 wherein the ratio of long axis to short axis of the said ellipse is 3:2.

7. The knighthead structure of rotor in the vertical axis wind turbine of any of Claims 1∼4 wherein the said connecting structure of the said knighthead or the end of the said primary knighthead to connect with the rotating component of the said wind turbine is as such: A T-shaped connecting piece is provided at the corresponding end of the said knighthead or the said primary knighthead, and such connecting piece includes one pipe segment whose bore matches the contour of the end of the said knighthead or the said primary knighthead, and a connecting piece is fixed at one end of the pipe segment, whose surface is greater than the cross-section area of the said pipe segment, and its end face matches the contour of the said rotor hub or the outer wall of the rotating component of the said wind turbine, on which a connecting structure is provided for making a fixed connection with the rotating component of the wind turbine, into the pipe bore of the pipe segment is inserted and fixed the end of the said primary knighthead; and/or,
The said connecting structure of the said knighthead or the end of the said secondary knighthead to connect with the inner side surface of the said blade is as such: A T-shaped connecting piece is provided at the end of the said knighthead or the said secondary knighthead, which connecting piece includes a pipe segment and which bore matches the contour of the end of the said knighthead or the said secondary knighthead, and a connecting piece is fixed at one end of the pipe segment, whose surface is greater than the cross-sectional area of the said pipe segment and whose end face matches the contour of the inner side surface wall of the said blade, and on the said connecting piece is provided a connecting structure used for making a fixed connection onto the inner side surface of the blade, and into the pipe bore of the pipe segment is inserted and fixed the end of the said knighthead or the secondary knighthead.

8. The knighthead structure of rotor in the vertical axis wind turbine of Claim 7 wherein the connecting structure provided on the connecting piece is a bolt hole or screw hole into which a bolt or screw is inserted in order to fix one end of the said knighthead on the rotating component or the rotor hub of the wind turbine while the other end is fixed on the blade.

9. The knighthead structure of rotor in the vertical axis wind turbine of Claim 2 wherein the two secondary knightheads are placed in the same horizontal plane, enabling the said secondary knightheads to be connected with the two ends of the said blade in the same horizontal plane.

10. The knighthead structure of rotor in the vertical axis wind turbine of Claim 1 or Claim 2 wherein the corresponding quantity of the said knighthead and the blade in the rotor is as such: one blade corresponds with two or more knightheads, and in the case of two knightheads, the connecting structures of the said two knightheads respectively correspond with the said inner side surface of the said blade at the upper and lower ends, which, through the knighthead or the said secondary knightheads, form the connecting structures at two points of the inner side surface of the said blade or at four points at the four corners; or in the case of multiple knightheads, the said connecting structures of two such knightheads correspond and are connected with the inner side surfaces of the said blade at the upper and lower ends respectively, while the rest of the knightheads correspond with the said inner side surfaces of the said blade between the upper and lower ends.
